# EUROPÄISCHE PATENTSCHRIFT

(11) **EP 3 653 042 B1**
(45) Veröffentlichungstag und Bekanntmachung des Hinweises auf die Patenterteilung: **18.01.2023**
(21) Anmeldenummer: 19208205.5
(22) Anmeldetag: 08.11.2019
(51) Int. Cl.: A01G 3/04, B27B 5/10

(54) **SCHWENKBARE SÄGEVORRICHTUNG ZUM ZUSCHNEIDEN VON PFLANZEN**
PIVOTING SAWING DEVICE FOR CUTTING PLANTS
DISPOSITIF DE SCIE PIVOTANT DESTINÉ AU DÉCOUPAGE DES PLANTES

(30) Priorität: 13.11.2018 DE 202018106426 U
(43) Veröffentlichungstag der Anmeldung: 20.05.2020
(73) Patentinhaber: Fliegl Agro-Center GmbH, 84556 Kastl (DE)
(72) Erfinder: Fliegl sen., Josef, 84556 Kastl (DE)
(74) Vertreter: Nußbaum, Christopher

(56) Entgegenhaltungen:
- EP-A1- 1 297 732
- DE-U1-202017 106 656
- GB-A- 1 267 928
- US-B1- 9 807 928

## Beschreibung

Die Erfindung betrifft eine an einem Trägerfahrzeug befestigbare schwenkbare Sägevorrichtung zum Zuschneiden von Pflanzen, insbesondere von Ästen.

Oftmals müssen Pflanzen, beispielsweise Bäume, Büsche und dergleichen, von Zeit zu Zeit zugeschnitten werden. Beispielsweise kann dies insbesondere erforderlich sein, wenn eine Straße seitlich mit Bäumen oder Büschen gesäumt ist. Um zu verhindern, dass die Bäume und/oder Büsche zu weit in Richtung der Straße hineinragen, ist es in regelmäßigen Abständen erforderlich, diese Pflanzen zu beschneiden. Es ist an sich bekannt, dafür Sägevorrichtungen vorzusehen, welche beispielsweise an Frontladern, Radladern oder auch an Teleskopladern angebracht werden können, sodass derartige Sägevorrichtungen relativ zügig an den zu beschneidenden bzw. zuzuschneidenden Pflanzen vorbeibewegt werden können.

Die DE 20 2017 106 656 U1 beschreibt eine Sägevorrichtung zum Zuschneiden von Pflanzen mit einem Traggestell zum Abbringen der Sägevorrichtung an einem Trägerfahrzeug. Seitlich am Traggestellt ist eine Sägeeinrichtung mit mehreren Sägeblättern angebracht, die aus- und eingeklappt werden kann. Gegenüberliegend von der Sägeeinrichtung ist ein Gegengewicht angeordnet, da ebenfalls aus- und eingefahren werden kann.

Es ist die Aufgabe der vorliegenden Erfindung, eine Sägevorrichtung bereitzustellen, mittels welcher auf besonders einfache und schnelle Weise Pflanzen, insbesondere Äste, zugeschnitten werden können.

Diese Aufgabe wird durch eine Sägevorrichtung zum Zuschneiden von Pflanzen mit den Merkmalen des Anspruchs 1 gelöst. Vorteile Ausgestaltungen mit zweckmäßigen und nicht trivialen Weiterbildungen der Erfindung sind in den abhängigen Ansprüchen angegeben.

Die erfindungsgemäße Sägevorrichtung zum Zuschneiden von Pflanzen, insbesondere von Ästen, welche an einem Trägerfahrzeug befestigbar ist, umfasst eine seitlich an einem Traggestell angeordnete Sägeeinrichtung, die um eine Querachse der Sägevorrichtung zwischen einer ersten Position, in welcher ein Eingriffsbereich der Sägeeinrichtung bezogen auf eine Längsrichtung der Sägevorrichtung nach vorne zeigt, und einer zweiten Position, in welcher der Eingriffsbereich der Sägeeinrichtung bezogen auf die Längsrichtung nach hinten zeigt, verschwenkbar ist, wobei die Längsrichtung orthogonal zu einer aus der Querachse und Hochrichtung der Sägevorrichtung aufgespannten Ebene verläuft.

Unter dem Eingriffsbereich der Sägeeinrichtung ist insbesondere derjenige Bereich der Sägeeinrichtung zu verstehen, welcher beim Zuschneiden der betreffenden Pflanzen in diese eintaucht, infolgedessen die Pflanzen durch die Sägeeinrichtung abgetrennt bzw. durchtrennt werden. Beispielsweise kann die Sägeeinrichtung eine oder auch mehrere Sägeblätter aufweisen, wobei ein jeweiliger Teil der Sägeblätter etwas über die restliche Sägeeinrichtung hinausragen kann. Dieser hinausragende Bereich der Sägeblätter ist dann als der Eingriffsbereich der Sägeeinrichtung zu verstehen. Dadurch, dass die Sägeeinrichtung um die besagte Querachse der Sägevorrichtung zwischen den beiden Positionen verschwenkt werden kann, kann der Eingriffsbereich der Sägeeinrichtung - je nach Bedarf - entweder so angeordnet werden, dass dieser bezogen auf die Längsrichtung der Sägevorrichtung nach vorne oder nach hinten zeigt.

Die Sägevorrichtung umfasst zudem zwei an gegenüberliegenden Stirnseiten des Traggestells angeordnete Schnittstellen zum Anbringen der Sägevorrichtung am Trägerfahrzeug, wobei in Abhängigkeit davon, mittels welcher der Schnittstellen die Sägevorrichtung am Trägerfahrzeug angebracht ist, die Sägeeinrichtung rechts oder links von einer Mittenlängsachse des Trägerfahrzeugs angeordnet ist. Das betreffende Trägerfahrzeug kann also von zwei gegenüberliegenden Seiten an die Sägevorrichtung heranfahren, um die Sägevorrichtung entweder unter Vermittlung der ersten oder der zweiten Schnittstelle am Trägerfahrzeug zu befestigen. Das Trägerfahrzeug selbst weist dafür eine entsprechende Schnittstelle auf, welche mit den beiden Schnittstellen der Sägevorrichtung zusammenwirken kann, um diese zuverlässig am Trägerfahrzeug zu befestigen. Erfindungsgemäß zeigt bezogen auf die Längsrichtung der Sägevorrichtung die eine Schnittstelle nach vorne und die andere Schnittstelle nach hinten.

Der große Vorteil der erfindungsgemäßen Sägevorrichtung entsteht durch das Zusammenspiel der um die besagte Querachse verschwenkbaren Sägeeinrichtung in Kombination mit den beiden an den gegenüberliegenden Stirnseiten des Traggestells angeordneten Schnittstellen zum Anbringen der Sägevorrichtung am betreffenden Trägerfahrzeug. Beispielsweise kann die Sägevorrichtung erst einmal so am betreffenden Trägerfahrzeug angebracht werden, dass die Sägeeinrichtung rechts von der Mittenlängsachse des Trägerfahrzeugs angeordnet ist. In dem Fall wird die Sägeeinrichtung zudem derart um die besagte Querachse der Sägevorrichtung verschwenkt, dass diese die erste Position einnimmt, in welcher der Eingriffsbereich der Sägeeinrichtung bezogen auf die Längsrichtung der Sägevorrichtung nach vorne zeigt. In dieser Anordnung der Sägevorrichtung am Trägerfahrzeug kann dieses beispielsweise eine Straße entlangfahren und dabei eine rechts von der Straße angeordnete Baumreihe mittels der Sägevorrichtung zuschneiden.

Sobald eine links von der Straße angeordnete Baumreihe mittels der Sägevorrichtung zugeschnitten werden soll, wird die Sägevorrichtung von dem Trägerfahrzeug getrennt. Anschließend kann die Sägevorrichtung derart wiederum am selben oder auch an einem anderen Trägerfahrzeug befestigt werden, dass die Sägeeinrichtung links von der Mittenlängsachse des betreffenden Trägerfahrzeugs angeordnet ist. Dies bedeutet also, dass nun die andere der beiden Schnittstellen verwendet wird, um die Sägevorrichtung am betreffenden Trägerfahrzeug anzuordnen. Dafür wird das betreffende Trägerfahrzeug nach dem Abladen bzw. Trennen von der Sägevorrichtung einfach von einer entsprechend gegenüberliegenden Stirnseite an die Sägevorrichtung herangefahren.

Anschließend oder auch vor dem Wechsel der Schnittstelle wird dann die Sägeeinrichtung so um die Querachse der Sägevorrichtung von der ersten Position in die zweite Position verschwenkt, in welcher der Eingriffsbereich der Sägeeinrichtung bezogen auf die Längsrichtung nach hinten zeigt. Mit anderen Worten kann die Sägeeinrichtung immer so um die betreffende Querachse der Sägevorrichtung verschwenkt werden, dass der Eingriffsbereich der Sägeeinrichtung von derjenigen Schnittstelle weg zeigt, unter deren Vermittlung gerade die Sägevorrichtung am betreffenden Trägerfahrzeug montiert bzw. befestigt ist.

Bei der erfindungsgemäßen Sägevorrichtung ist es nicht erforderlich, die gesamte Sägeeinrichtung von der linken Seite auf die rechte Seite bzw. umgekehrt zu tauschen, wenn die Sägeeinrichtung einmal links und einmal rechts vom betreffenden Trägerfahrzeug bzw. zumindest von dessen Mittenlängsachse angeordnet werden soll. Stattdessen muss einfach die Sägeeinrichtung um die Querachse der Sägevorrichtung zwischen der ersten Position der zweiten Position verschwenkt und die Sägevorrichtung entweder entsprechend mittels der einen oder anderen Schnittstelle am betreffenden Trägerfahrzeug angebracht werden. Dadurch kann ein Pflanzenbewuchs sowohl rechtsseitig als auch linksseitig vom Trägerfahrzeug beschnitten werden.

Eine vorteilhafte Ausführungsform der Erfindung sieht vor, dass die Sägeeinrichtung an einer Oberseite einer Stange des Traggestells verschwenkbar gelagert ist, wobei ein Gestänge der Sägeeinrichtung jeweilige Anschläge aufweist, welche in der ersten und zweiten Position an jeweils gegenüberliegenden Seiten der Stange anliegen. Durch die besagten Anschläge wird der Bewegungsspielraum der Sägeeinrichtung um die Querachse automatisch beschränkt. Sobald die erste bzw. zweite Position beim Verschwenken der Sägeeinrichtung um die Querachse der Sägevorrichtung erreicht wird, liegen die besagten Anschläge automatisch an den niemals gegenüberliegenden Seiten der Stange an.

Eine weitere vorteilhafte Ausführungsform der Erfindung sieht vor, dass die Sägeeinrichtung mittels eines Befestigungsmittels, insbesondere mittels einer Bügelschraube, in der ersten und zweiten Position am Traggestell fixierbar ist. Dadurch kann insbesondere während des Betriebs der Sägevorrichtung zuverlässig sichergestellt werden, dass die Sägeeinrichtung nicht um die Querachse der Sägevorrichtung verschwenkt werden kann. Denn aufgrund des Befestigungsmittels wird die Sägeeinrichtung zuverlässig in der ersten oder zweiten Position am Traggestell, beispielsweise an der besagten Stange des Traggestells, festgelegt.

Gemäß einer weiteren fortlaufenden Ausführungsform der Erfindung ist es vorgesehen, dass die Sägeeinrichtung eine Antriebseinrichtung zum Verschwenken der Sägeeinrichtung zwischen der ersten und zweiten Position aufweist. Beispielsweise kann die Sägevorrichtung einen angetriebenen Drehkranz aufweisen, mittels welchem die Sägeeinrichtung um die besagte Querachse zwischen den beiden Positionen verschwenkt werden kann. Beispielsweise ist es auch möglich, dass die Sägevorrichtung einen oder auch mehrere Hydraulikzylinder aufweist, mittels welchem oder welchen die Sägeeinrichtung zwischen der ersten und zweiten Position verschwenkt werden kann. Durch das Vorsehen der Antriebseinrichtung kann die Sägeeinrichtung besonders einfach, schnell und bequem zwischen der ersten und zweiten Position verstellt werden.

In weiterer vorteilhafter Ausgestaltung der Erfindung ist es vorgesehen, dass die Schnittstellen zur Befestigung an einem Frontlader eines Traktors, an einem Hubrahmen eines Radladers und/oder einem Teleskoparm eines Teleskopladers ausgelegt sind. Auch ist es möglich, dass an den gegenüberliegenden Stirnseiten des Traggestells unterschiedlich ausgebildete Schnittstellen zum Anbringen der Sägevorrichtung an unterschiedlichen Trägerfahrzeugen vorgesehen sind. So kann beispielsweise zunächst die Sägevorrichtung mittels der entsprechend ausgebildeten Schnittstelle an einem Frontlader eines Traktors angebracht sein. Der Traktor fährt beispielsweise eine von Bäumen gesäumte Straße in eine erste Richtung ab, wobei währenddessen die rechts vom Traktor angeordneten Bäume mittels der Sägevorrichtung beschnitten werden. Danach fährt der Traktor mitsamt der an diesem angebrachten Sägevorrichtung an einen Radlader heran, und zwar so, dass der Radlader die Sägevorrichtung an derjenigen Schnittstelle aufnehmen kann, welche noch frei ist. Nach der Übergabe und entsprechenden Befestigung der Sägevorrichtung am Radlader kann dann die Sägeeinrichtung um die Querachse verschwenkt werden, sodass der Eingriffsbereich der Sägeeinrichtung danach von der Schnittstelle der Sägevorrichtung weg zeigt, mittels welcher die Sägevorrichtung am Radlader befestigt worden ist. Anschließend fährt der Radlader mit der an diesem angebrachten Sägevorrichtung, wobei die Sägeeinrichtung bezogen auf die Querrichtung des Radladers genau auf der anderen Seite wie zuvor beim Traktor angeordnet ist. Der Traktor konnte somit beispielsweise Bäume rechts von sich und der Radlader kann nun Bäume links von sich beschneiden, ohne dass dafür die Schneideinrichtung von einer Seite auf die andere Seite der Schneidvorrichtung montiert werden muss.

Eine weitere vorteilhafte Ausführungsform der Erfindung sieht vor, dass die Sägeeinrichtung zumindest ein in Rotation versetzbares Kreissägeblatt aufweist. Vorzugsweise umfasst die Sägeeinrichtung mehrerer solcher Kreissägeblätter, welche in einer Reihe nebeneinander bzw. hintereinander angeordnet sind. Dadurch ergibt sich ein besonders breiter Eingriffsbereich der Sägeeinrichtung. Infolgedessen kann beispielsweise ohne Höhenverstellung der Sägevorrichtung ein besonders hoher Bereich an Bäumen gleichzeitig beschnitten werden. Mittels einem Kreissägeblatt oder vorzugsweise mehreren Kreissägeblättern können Äste oder dergleichen zudem besonders zuverlässig beschnitten werden.

In weiterer vorteilhafter Ausgestaltung der Erfindung ist es vorgesehen, dass die Sägeeinrichtung einen Antrieb für das zumindest eine Kreissägeblatt aufweist, bei welchem eine Drehrichtung umkehrbar ist. Je nachdem, ob die Sägeeinrichtung gerade in der ersten oder in der zweiten Position angeordnet worden ist, kann dann die passende Drehrichtung beim betreffenden Antrieb für das zumindest eine Kreissägeblatt eingestellt werden. So kann jederzeit zuverlässig sichergestellt werden, dass je nach Anordnung der Sägeeinrichtung die passende Drehrichtung bei dem Kreissägeblatt eingestellt ist, um ein gutes Schnittergebnis zu erzielen. Erfolgt der Antrieb beispielsweise hydraulisch, so kann es vorgesehen sein, dass an der Sägevorrichtung entsprechende Hydraulikanschlüsse einfach nur umgesteckt werden müssen.

Gemäß einer weiteren vorteilhaften Ausführungsform der Erfindung ist es vorgesehen, dass das zumindest eine Kreissägeblatt für zwei unterschiedliche Drehrichtungen an einer Aufnahme der Sägeeinrichtung wieder lösbar befestigbar ist. Beispielsweise kann das Kreissägeblatt mittels mehrerer Schrauben wieder lösbar an der besagten Aufnahme der Sägeeinrichtung befestigt werden. Wird die Drehrichtung des Antriebs umgekehrt, so kann das Kreissägeblatt einfach von der Aufnahme abgeschraubt, umgedreht und dann wieder festgeschraubt werden. Denn vorzugsweise werden solche Kreissägeblätter verwendet, welche drehrichtungsabhängige Zähne aufweisen. Dadurch kann eine besonders saubere Schnittkante und eine besonders gute Schnittleistung sichergestellt werden.

Eine alternative vorteilhafte Ausführungsform der Erfindung sieht vor, dass die Sägeeinrichtung ein translatorisch in Oszillation versetzbares Sägeblatt oder eine Sägekette aufweist. Neben Kreissägeblättern können also auch andere Mittel zum Beschneiden von Pflanzen vorgesehen sein.

Schließlich sieht eine weitere vorteilhafte Ausführungsform der Erfindung vor, dass die Sägeeinrichtung um eine Längsachse der Sägevorrichtung verschwenkbar gelagert ist. Dadurch können beispielsweise auch unterschiedlich geneigte Schnittkanten bei einem Baumbewuchs oder dergleichen durch entsprechendes Verschwenken der Sägeeinrichtung um die besagte Längsachse der Sägevorrichtung erzielt werden.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung und oder in den Figuren alleine gezeigten Merkmale und Merkmalskombinationen sind nicht nur in der angegebenen Kombination, sondern auch in anderen Kombinationen oder in Alleinstellung verwendbar, ohne den Rahmen der Erfindung zu verlassen.

Die Zeichnung zeigt in:
- Fig. 1: eine Seitenansicht eines Traktors mit einem Frontlader, an welchem eine Sägevorrichtung angebracht ist, die eine verschwenkbare Sägeeinrichtung mit drei Kreissägeblättern umfasst;
- Fig. 2: eine Perspektivansicht der Sägevorrichtung alleine;
- Fig. 3: eine vergrößerte perspektivische Detailansicht der Sägevorrichtung, wobei insbesondere eine verschwenkbare Lagerung der Sägeeinrichtung um eine Querachse der Sägevorrichtung gezeigt ist; und in
- Fig. 4: vier Seitenansichten der Sägevorrichtung, anhand derer die Verschwenkung der Sägeeinrichtung um die Querachse verdeutlicht wird.

In den Figuren sind gleiche oder funktionsgleiche Elemente mit den gleichen Bezugszeichen versehen worden.

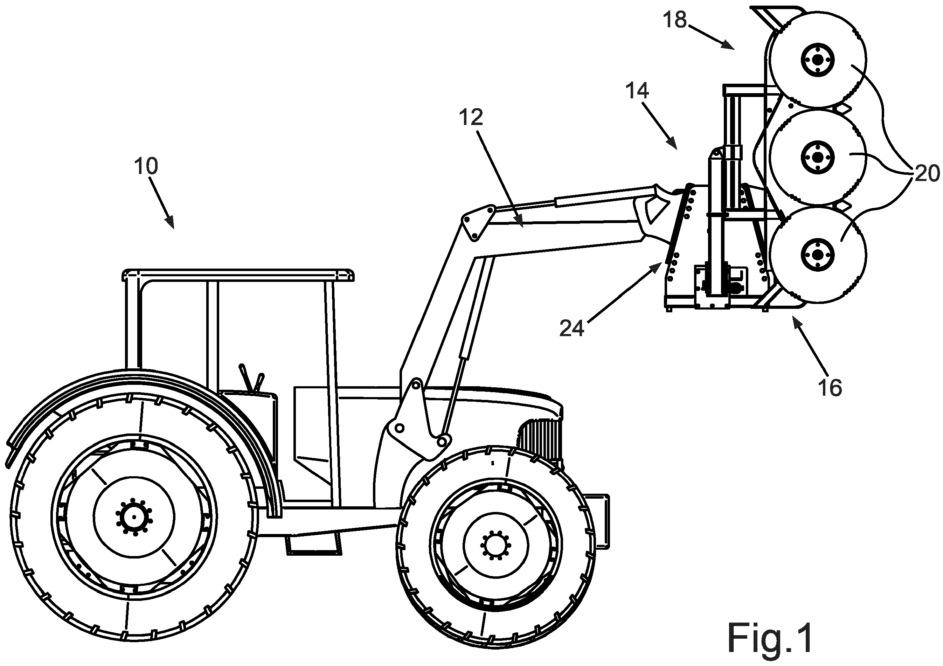

Ein Traktor 10 ist in einer Seitenansicht in Fig. 1 gezeigt. Der Traktor 10 umfasst einen Frontlader 12, an welchem eine Sägevorrichtung 14 angebracht ist. Die Sägevorrichtung 14 umfasst ein Traggestell 16, an welchem eine Sägeeinrichtung 18 mit drei in Reihe angeordneten Kreissägeblättern 20 angeordnet ist. An zwei nicht näher bezeichneten gegenüberliegenden Stirnseiten des Traggestells 16 sind zwei Schnittstellen 22, 24 (erstere ist aufgrund der vorliegend gewählten Perspektive nicht zu erkennen) angeordnet. Entsprechend der vorliegenden Darstellung ist die Sägevorrichtung 14 mittels der Schnittstelle 24 am Frontlader 12 angebracht bzw. befestigt worden.

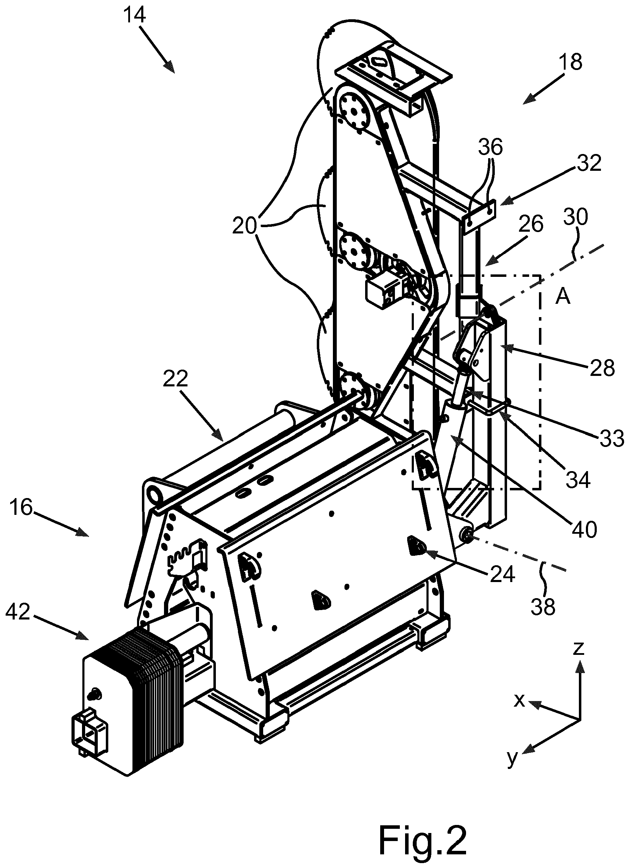

In Fig. 2 ist die Sägevorrichtung 14 alleine - also ohne den Traktor 10 - in einer Perspektivansicht gezeigt. Mit x ist die Längsrichtung, mit y die Querrichtung und mit z die Hochrichtung der Sägevorrichtung 14 bezeichnet worden. Gemäß der in Fig. 1 gezeigten Anordnung der Sägevorrichtung 14 am Traktor 10 entsprechenden diese Achsen x, y, z auch der Längsrichtung, Querrichtung und Hochrichtung des Traktors 10.

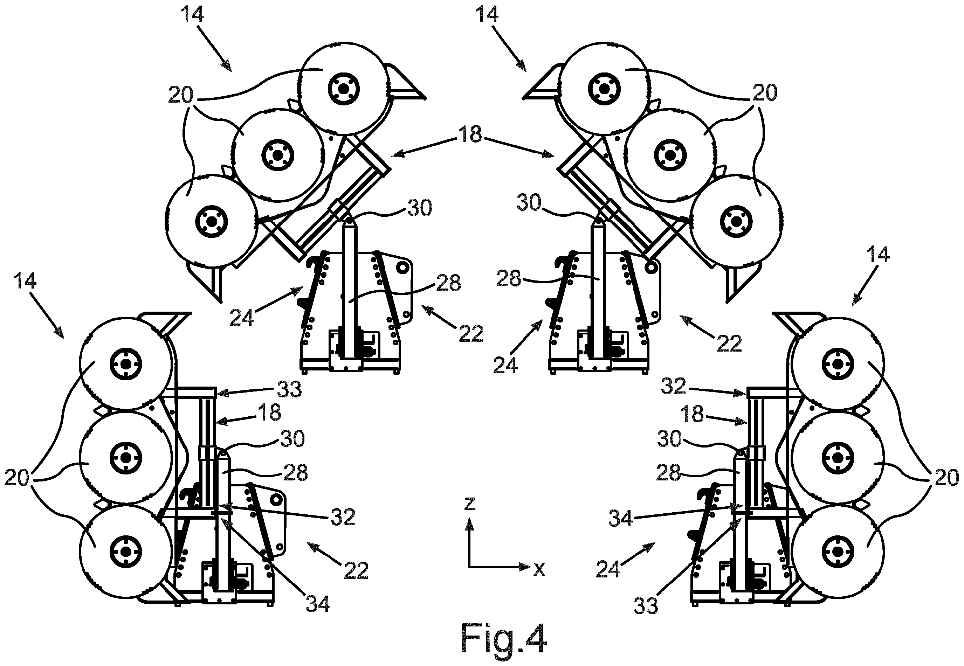

In der vorliegenden Darstellung sind die beiden bereits erwähnten mechanischen Schnittstellen 22, 24 gut zu erkennen, welche an gegenüberliegenden nicht näher bezeichneten Stirnseiten des Traggestells 16 angeordnet sind. Mit anderen Worten sin die Schnittstellen in Längsrichtung x voneinander beabstandet am Traggestell 16 angeordnet. Die Sägeeinrichtung 18 ist seitlich am Traggestell 16 angeordnet, also in Querrichtung y versetzt zu den Schnittstellen 22, 24 angebracht. Dabei umfasst die Sägeeinrichtung 18 ein Gestänge 26, welches an einer nicht näher bezeichneten Oberseite einer Stange 28 des Traggestells 16 angeordnet ist. Die Sägeeinrichtung 18 ist um eine Querachse 30 der Sägevorrichtung 14 zwischen der hier gezeigten ersten Position und einer erst in Fig. 4 gezeigten zweiten Position verschwenkbar an der Oberseite der Stange 28 gelagert. Die Querachse 30 verläuft zumindest im Wesentlichen parallel zur Querrichtung y der Sägevorrichtung 14.

Die Sägeeinrichtung 18 umfasst an ihrem Gestänge 26 zwei Anschläge 32, 33, welche in der ersten und zweiten Position an jeweils gegenüberliegenden Seiten der Stange 28 anliegen. In der hier gezeigten ersten Position der Sägeeinrichtung liegt der Anschlag 33 an der Stange 28 an. Eine Bügelschraube 34 dient dabei als Befestigungsmittel, um die in der hier gezeigten ersten Position bzw. in der erst in Fig. 4 gezeigten zweiten Position angeordnete Sägeeinrichtung 18 an der Stange 28 des Traggestells 16 zu fixieren. Die Bügelschraube 34 kann in entsprechende Bohrungen 36 der jeweiligen Anschläge 32, 33 eintauchen, um die Sägeeinrichtung 18 in der ersten bzw. zweiten Position an der Stange 28 zu fixieren.

Entgegen der vorliegenden Darstellung kann noch eine Antriebseinrichtung vorgesehen sein, mittels welcher die Sägeeinrichtung 18 voll automatisch um die Querachse 30 verschwenkt werden kann. Dies kann beispielsweise in Form eines angetriebenen Drehkranzes oder dergleichen realisiert sein. Genauso gut es aber auch möglich, dass die Sägeeinrichtung 18 manuell, beispielsweise mit zwei Leuten, einfach um die Querachse 30 verschwenkt wird.

Die Sägeeinrichtung 18 ist zudem um eine Längsachse 38 der Sägevorrichtung 14 verschwenkbar gelagert. Die Längsachse 38 verläuft zumindest im Wesentlichen parallel zur Längsrichtung x. Dadurch kann ein Anstellwinkel der Kreissägeblätter 20 gegenüber der Hochrichtung z der Sägevorrichtung 14 variiert werden. Mit anderen Worten kann die Sägeeinrichtung 18 also relativ zu einer aus der Längsrichtung x und Hochrichtung z aufgespannten Ebene verschwenkt werden. Zum Verschwenken bzw. Verdrehen der Sägeeinrichtung 18 um die Längsachse 38 umfasst die Sägevorrichtung 14 einen Hydraulikzylinder 40, welcher mit einem Längsende an der Stange 28 und mit einem anderen Längsende an einem anderen Teil des Traggestells 16 angebracht ist. Durch Einfahren und Ausfahren des Hydraulikzylinders 40 kann der Anstellwinkel der Sägeeinrichtung 18, somit der Anstellwinkel der Kreissägeblätter 20, gegenüber der aus der Längsrichtung x und Hochrichtung z aufgespannten Ebene verändert werden.

Neben der Verschwenkung der Sägeeinrichtung 18 um die Querachse 30 und die Längsachse 38 kann die Sägeeinrichtung 18 auch translatorisch in Querrichtung y ausgefahren und eingefahren werden. Damit der Schwerpunkt der gesamten Sägevorrichtung 14 dabei in Querrichtung y nicht verschoben wird, kann ein Gegengewicht 42 der Sägevorrichtung 14 ebenfalls in Querrichtung y eingefahren und ausgefahren werden. Letzteres kann beispielsweise auch in Abhängigkeit davon erfolgen, wie weit der Hydraulikzylinder 40 eingefahren oder ausgefahren wurde, also wie schräg die Schneideinrichtung 18 zur Hochrichtung z angeordnet wurde.

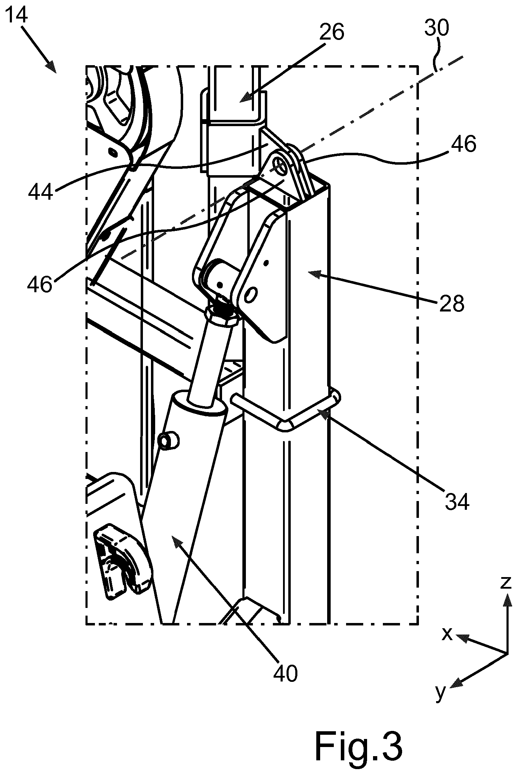

In Fig. 3 ist ein Ausschnitt A (siehe Fig. 2) der Sägevorrichtung 14 in einer perspektivischen Detailansicht gezeigt. In der vorliegenden Darstellung kann man die schwenkbare Lagerung der Sägeeinrichtung 18 mit ihrem Gestänge 26 gut erkennen. Am Gestänge 26 ist ein Fortsatz 44 angeordnet, der zwischen zwei Fortsätzen 46 an der Oberseite der Stange 30 angeordnet ist. Sämtliche Fortsätze 44, 46 weisen jeweils eine nicht näher bezeichnete Bohrung auf, durch welche sich die Querachse 30 erstreckt. Bei den Bohrungen handelt es sich also um Durchgangsöffnungen. Die Querachse 30 ist zumindest im Wesentlichen konzentrisch zu den besagten Bohrungen der Fortsätze 44, 46 angeordnet. Ein hier nicht näher dargestellter Zapfen oder dergleichen kann durch die Bohrungen der Fortsätze 44, 46 hindurchgeführt sein, sodass einerseits der Fortsatz 44 in allen drei Raumrichtungen zwischen den Fortsätzen 46 fixiert und andererseits ausschließlich ein Drehfreiheitsgrad um die Querachse 30 ermöglicht wird. Natürlich kann die Sägeeinrichtung 18 auch auf andere Weise um die Querachse 30 verschwenkbar an der Stange 30 oder allgemeiner an dem Traggestell 16 der Sägevorrichtung 14 angeordnet sein.

In Fig. 4 ist die Sägevorrichtung 14 vier Mal in einer Seitenansicht abgebildet, wobei die Sägeeinrichtung 18 in unterschiedlichen um die Querachse 30 verschwenkten Positionen dargestellt ist. Ausgehend von der Abbildung rechts unten, in welcher sich die Sägeeinrichtung 18 in der ersten Position, genau wie in den Figuren 1 und 2, befindet, wird die Sägeeinrichtung 18 gemäß der vorliegenden Darstellung gegen den Uhrzeigersinn immer weiter verschwenkt, bis schließlich die Sägeeinrichtung 18 gemäß der vorliegenden Darstellung links unten ihre zweite Position erreicht hat, welche vorstehend schon erwähnt worden war.

In der ersten Position der Sägeeinrichtung 18 - also gemäß der Darstellung rechts unten - ist die Fahrtrichtung in positiver x-Richtung. In dem Fall ist die Sägevorrichtung 14 unter Vermittlung der Schnittstelle 24 beispielsweise an dem in Fig. 1 gezeigten Traktor 10 anzubringen. Die Sägeeinrichtung 18 mit ihren Kreissägeblättern 20 befindet sich dabei rechts vom Traktor 10, insbesondere rechts von einer Längsmittenachse des Traktors 10. So kann der Traktor 10 beispielsweise Bäume oder andere Gewächse rechts von sich mittels in der Kreissägeblätter 20 zurechtschneiden.

Soll nun eine beispielsweise eine links vom Traktor 10 angeordnete Baumreihe oder dergleichen mittels der Sägevorrichtung 14 beschnitten werden, so kann der Traktor 10 die Sägevorrichtung 14 beispielsweise an einen Radlader übergeben, welcher die Sägevorrichtung 14 an der Schnittstelle 22 entgegennimmt und befestigt. Danach kann der Frontlader 12 des Traktors 10 von der Schnittstelle 24 entfernt werden. Noch zeigen die Kreissägeblätter 20 nach der Übergabe an den Radlader in dieselbe Richtung wie in der Darstellung rechts unten in Fig. 4.

Der besagte Radlader fährt dann allerdings in Vorwärtsfahrtrichtung genau entgegengesetzt zu der hier eingezeichneten Längsrichtung x. Die Kreissägeblätter 20 befinden sich zudem links vom besagten Radlader und nicht mehr rechts vom Traktor 10, wie in Fig. 1 dargestellt. Die Schneideinrichtung 18 mitsamt den Kreissägeblättern 20 wird daher ausgehend von der ersten Position - also der Darstellung rechts unten gemäß Fig. 4 - gegen den Uhrzeigersinn um die Querachse 30 in die zweite Position verschwenkt, so wie in Fig. 4 links unten dargestellt.

Anschließend kann der hier nicht gezeigte Radlader entgegengesetzt zur Längsrichtung x der Sägevorrichtung 14 vorwärtsfahren, wobei der Eingriffsbereich der drei Kreissägeblätter 20 nun aufgrund der Anordnung der Schneideinrichtung 18 in der zweiten Position bezogen auf die Vorwärtsfahrtrichtung des Radladers nach vorne zeigen.

Die jeweilige Vorwärtsfahrtrichtung eines jeweiligen Trägerfahrzeugs, an welchem die Sägevorrichtung 14 angebracht ist, legt also fest, ob die Sägeeinrichtung 18 in der ersten Position - wie in Fig. 4 rechts unten dargestellt - oder in der zweiten Position - wie in Fig. 4 links unten dargestellt - anzuordnen ist. Die Sägeeinrichtung 18 wird mit anderen Worten also immer so um die Querachse 30 verschwenkt, dass der jeweilige über die restliche Sägeeinrichtung 18 hinausragende Bereich der Kreissägeblätter 20, also der Eingriffsbereich der Sägeeinrichtung 18, immer von derjenigen Schnittstelle 22, 24 abgewandt ist, an welcher die Sägevorrichtung 14 am betreffenden Trägerfahrzeug, wie beispielsweise dem in Fig. 1 gezeigten Traktor 10, befestigt ist.

Die Sägevorrichtung 14 bzw. die Sägeeinrichtung 18 kann eine Antriebseinrichtung für die Kreissägeblätter 20 aufweisen, bei welcher eine Drehrichtungsumkehr vorgenommen werden kann. Funktioniert die Antriebseinrichtung beispielsweise hydraulisch, so können einfach zugehörige hydraulische Leitungen an der Sägeeinrichtung 18 umgesteckt werden, um die besagte Drehrichtungsumkehr zu erzielen. So kann auf einfache Weise immer die richtige Drehrichtung bei den Kreissägeblättern 20 sichergestellt werden, je nachdem ob die Sägeeinrichtung 18 in der ersten oder der zweiten Position angeordnet ist.

Die Kreissägeblätter 20 können zudem drehrichtungsabhängig geformte Sägezähne aufweisen. In dem Fall sind jeweilige, hier nicht näher bezeichnete Schrauben oder andere Befestigungsmittel an den Kreissägeblättern 20 zu lösen und die Kreissägeblätter 20 umzudrehen sowie danach wieder an entsprechenden Aufnahmen der Sägeeinrichtung 18 zu befestigen, nachdem die Sägeeinrichtung 18 von der ersten Position in die zweite Position oder umgekehrt verschwenkt worden ist. In Kombination mit der besagten Drehrichtungsumkehr kann so auf einfache Weise sichergestellt werden, dass bei den Kreissägeblättern 20 die Sägezähne entsprechend der gerade gewählten Drehrichtung korrekt ausgerichtet bzw. angeordnet sind.

Insbesondere ist es bei der Sägevorrichtung 14 möglich, diese einfach von einem Trägerfahrzeug an ein anderes Trägerfahrzeug zu übergeben, ohne dass die Sägeeinrichtung 18 von einer Seite auf die andere Seite der Sägevorrichtung 14 montiert werden muss. Stattdessen muss die Sägeeinrichtung 18 einfach nur um die Querachse 30 verschwenkt werden, damit je nach Fahrtrichtung der Eingriffsbereich der Kreissägeblätter 20 auch immer in die richtige Richtung, üblicherweise nach vorne bezogen auf die jeweilige Fahrtrichtung, zeigt.

Zudem ist es bei der Sägevorrichtung 14 auch möglich, dass ein und derselbe Trägerfahrzeug die Sägevorrichtung 14 einmal unter Vermittlung der Schnittstelle 22 und einmal unter Vermittlung der Schnittstelle 24 aufnimmt. Auf diese Weise kann beim selben Trägerfahrzeug bei Bedarf die Sägeeinrichtung 18 ganz einfach einmal rechts und einmal links von der Mittenlängsachse des Trägerfahrzeugs angeordnet werden.

### BEZUGSZEICHENLISTE:

- 10: Traktor
- 12: Frontlader
- 14: Sägevorrichtung
- 16: Traggestell
- 18: Sägeeinrichtung
- 20: Kreissägeblätter
- 22: Schnittstelle am Traggestell
- 24: Schnittstelle am Traggestell
- 26: Gestänge der Sägeeinrichtung
- 28: Stange des Traggestells
- 30: Querachse
- 32: Anschlag am Gestänge
- 33: Anschlag am Gestänge
- 34: Bügelschraube
- 36: Bohrungen in den Anschlägen
- 38: Längsachse
- 40: Hydraulikzylinder
- 42: Gegengewicht
- 44: Fortsatz am Gestänge
- 46: Fortsätze an der Stange des Traggestells
- A: Ausschnitt

## Patentansprüche

1. Sägevorrichtung (14) zum Zuschneiden von Pflanzen, insbesondere von Ästen, welche an einem Trägerfahrzeug (10) befestigbar ist, umfassend
- eine seitlich an einem Traggestell (16) angeordnete Sägeeinrichtung (18), **dadurch gekennzeichnet, dass** die Sägeeinrichtung um eine Querachse (30) der Sägevorrichtung (14) zwischen einer ersten Position, in welcher ein Eingriffsbereich der Sägeeinrichtung (18) bezogen auf eine Längsrichtung (x) der Sägevorrichtung (14) nach vorne zeigt, und einer zweiten Position, in welcher der Eingriffsbereich der Sägeeinrichtung (18) bezogen auf die Längsrichtung (x) nach hinten zeigt, verschwenkbar ist, wobei die Längsrichtung (x) orthogonal zu einer aus der Querachse (30) und Hochrichtung (z) der Sägevorrichtung (14) aufgespannten Ebene verläuft;
- zwei an gegenüberliegenden Stirnseiten des Traggestells (16) angeordnete Schnittstellen (22, 24) zum Anbringen der Sägevorrichtung (14) am Trägerfahrzeug (10), wobei bezogen auf die Längsrichtung (x) der Sägevorrichtung die eine Schnittstelle (22) nach vorne und die andere Schnittstelle (24) nach hinten zeigt.

2. Sägevorrichtung (14) nach Anspruch 1,
**dadurch gekennzeichnet, dass**
die Sägeeinrichtung (18) an einer Oberseite einer Stange (28) des Traggestells (16) verschwenkbar gelagert ist, wobei ein Gestänge (26) der Sägeeinrichtung (18) jeweilige Anschläge (32, 33) aufweist, welche in der ersten und zweiten Position an jeweils gegenüberliegenden Seiten der Stange (28) anliegen.

3. Sägevorrichtung (14) nach Anspruch 1 oder 2,
**dadurch gekennzeichnet, dass**
die Sägeeinrichtung (18) mittels eines Befestigungsmittels, insbesondere mittels einer Bügelschraube (34), in der ersten und zweiten Position am Traggestell (16) fixierbar ist.

4. Sägevorrichtung (14) nach einem der vorhergehenden Ansprüche,
**dadurch gekennzeichnet, dass**
die Sägevorrichtung (14) eine Antriebseinrichtung zum Verschwenken der Sägeeinrichtung (18) zwischen der ersten und zweiten Position aufweist.

5. Sägevorrichtung (14) nach einem der vorhergehenden Ansprüche,
**dadurch gekennzeichnet, dass**
die Schnittstellen (22, 24) zur Befestigung an einem Frontlader (12) eines Traktors (10), an einem Hubrahmen eines Radladers und/oder einem Teleskoparm eines Teleskopladers ausgelegt sind.

6. Sägevorrichtung (14) nach einem der vorhergehenden Ansprüche,
**dadurch gekennzeichnet, dass**
die Sägeeinrichtung (18) zumindest ein in Rotation versetzbares Kreissägeblatt (20) aufweist.

7. Sägevorrichtung (14) nach Anspruch 6,
**dadurch gekennzeichnet, dass**
die Sägeeinrichtung (18) einen Antrieb für das zumindest eine Kreissägeblatt (20) aufweist, bei welchem eine Drehrichtung umkehrbar ist.

8. Sägevorrichtung (14) nach Anspruch 6 oder 7,
**dadurch gekennzeichnet, dass**
das zumindest eine Kreissägeblatt (20) für zwei unterschiedliche Drehrichtungen an einer Aufnahme der Sägeeinrichtung (18) wieder lösbar befestigbar ist.

9. Sägevorrichtung (14) nach der Ansprüche 1 bis 5,
**dadurch gekennzeichnet, dass**
die Sägeeinrichtung (18) ein translatorisch in Oszillation versetzbares Sägeblatt oder eine Sägekette aufweist.

10. Sägevorrichtung (14) nach einem der vorhergehenden Ansprüche,
**dadurch gekennzeichnet, dass**
die Sägeeinrichtung (18) um eine Längsachse (38) der Sägevorrichtung (14) verschwenkbar gelagert ist.

## Claims

1. Sawing device (14) for cutting plants, in particular branches, which can be attached to a carrier vehicle (10), comprising
- a sawing unit (18) arranged laterally on a support frame (16), **characterised in that** the sawing unit can be pivoted about a transverse axis (30) of the sawing device (14) between a first position, in which an engagement region of the sawing unit (18) points forwards in relation to a longitudinal direction (x) of the sawing device (14), and a second position, in which the engagement region of the sawing unit (18) points backwards in relation to the longitudinal direction (x), the longitudinal direction (x) extending orthogonally to a plane formed by the transverse axis (30) and the vertical direction (z) of the sawing device (14);
- two interfaces (22, 24) arranged on opposite end faces of the support frame (16) for fitting the sawing device (14) to the carrier vehicle (10), one interface (22) facing forwards and the other interface (24) facing backwards in relation to the longitudinal direction (x) of the sawing device.

2. Sawing device (14) according to claim 1,
**characterised in that**
the sawing unit (18) is pivotally mounted on an upper side of a bar (28) of the support frame (16), wherein a linkage (26) of the sawing unit (18) has respective stops (32, 33) which abut against respective opposite sides of the bar (28) in the first and second positions.

3. Sawing device (14) according to claim 1 or 2,
**characterised in that**
the sawing unit (18) can be fixed in the first and second position on the support frame (16) by means of an attachment means, in particular by means of a U-bolt (34).

4. Sawing device (14) according to any one of the preceding claims,
**characterised in that**
the sawing device (14) has a drive unit for pivoting the sawing unit (18) between the first and second position.

5. Sawing device (14) according to any one of the preceding claims,
**characterised in that**
the interfaces (22, 24) are configured for attachment to a front loader (12) of a tractor (10), to a lifting frame of a wheel loader and/or to a telescopic arm of a telescopic loader.

6. Sawing device (14) according to any one of the preceding claims,
**characterised in that**
the sawing unit (18) has at least one circular saw blade (20) that can be set in rotation.

7. Sawing device (14) according to claim 6,
**characterised in that**
the sawing unit (18) has a drive for the at least one circular saw blade (20), with which a direction of rotation can be reversed.

8. Sawing device (14) according to claim 6 or 7,
**characterised in that**
the at least one circular saw blade (20) can be releasably reattached to a mounting of the sawing unit (18) for two different directions of rotation.

9. Sawing device (14) according to claims 1 to 5,
**characterised in that**
the sawing unit (18) has a saw blade or a saw chain which can be set in translatory oscillation.

10. Sawing device (14) according to any one of the preceding claims,
**characterised in that**
the sawing unit (18) is pivotally mounted about a longitudinal axis (38) of the sawing device (14).

## Revendications

1. Dispositif de sciage (14) pour couper des plantes, en particulier des branches, lequel peut être fixé à un véhicule porteur (10), comprenant
- un appareil de sciage (18) agencé latéralement sur un châssis de support (16), **caractérisé en ce que** l'appareil de sciage est agencé autour d'un axe transversal (30) du dispositif de sciage (14) entre une première position, dans laquelle une zone d'engagement de l'appareil de sciage (18) est orientée vers l'avant par rapport à une direction longitudinale (x) du dispositif de sciage (14), et une seconde position dans laquelle la zone de prise de l'appareil de sciage (18) est dirigée vers l'arrière par rapport à la direction longitudinale (x), dans lequel la direction longitudinale (x) s'étend orthogonalement à un plan formé par l'axe transversal (30) et la direction verticale (z) du dispositif de sciage (14) ;
- deux interfaces (22, 24) agencées sur des côtés frontaux opposés du châssis de support (16) pour monter le dispositif de sciage (14) sur le véhicule porteur (10), dans lequel, par rapport à la direction longitudinale (x) du dispositif de sciage, l'une des interfaces (22) est orientée vers l'avant et l'autre interface (24) vers l'arrière.

2. Dispositif de sciage (14) selon la revendication 1,
**caractérisé en ce que**
l'appareil de sciage (18) est monté de manière pivotante sur une face supérieure d'une barre (28) du châssis de support (16), dans lequel une tringlerie (26) de l'appareil de sciage (18) présente des butées respectives (32, 33) qui, dans la première et la seconde position, s'appuient respectivement sur des côtés opposés de la barre (28).

3. Dispositif de sciage (14) selon la revendication 1 ou 2,
**caractérisé en ce que**
l'appareil de sciage (18) peut être fixé dans la première et la seconde position sur le châssis de support (16) grâce à un moyen de fixation, en particulier grâce à une vis à étrier (34).

4. Dispositif de sciage (14) selon l'une quelconque des revendications précédentes,
**caractérisé en ce que**
le dispositif de sciage (14) présente un appareil d'entraînement pour faire pivoter l'appareil de sciage (18) entre la première et la seconde position.

5. Dispositif de sciage (14) selon l'une quelconque des revendications précédentes,
**caractérisé en ce que**
les interfaces (22, 24) sont conçues pour être fixées à un chargeur frontal (12) d'un tracteur (10), à un châssis de levage d'un chargeur sur roues et/ou à un bras télescopique d'un chargeur télescopique.

6. Dispositif de sciage (14) selon l'une quelconque des revendications précédentes,
**caractérisé en ce que**
l'appareil de sciage (18) présente au moins une lame de scie circulaire (20) pouvant être mise en rotation.

7. Dispositif de sciage (14) selon la revendication 6,
**caractérisé en ce que**
l'appareil de sciage (18) présente un entraînement pour la au moins une lame de scie circulaire (20), dans lequel un sens de rotation peut être inversé.

8. Dispositif de sciage (14) selon la revendication 6 ou 7,
**caractérisé en ce que**
la au moins une lame de scie circulaire (20) peut être fixée de nouveau de manière amovible pour deux sens de rotation différents sur un réceptacle de l'appareil de sciage (18).

9. Dispositif de sciage (14) selon les revendications 1 à 5,
**caractérisé en ce que**
l'appareil de sciage (18) présente une lame de scie ou une chaîne de scie pouvant être mise en oscillation par translation.

10. Dispositif de sciage (14) selon l'une quelconque des revendications précédentes, **caractérisé en ce que**
l'appareil de sciage (18) est monté de manière à pouvoir pivoter autour d'un axe longitudinal (38) du dispositif de sciage (14).
